# EUROPEAN PATENT APPLICATION

(11) **EP 2 894 899 A1**
(43) Date of publication of application: **15.07.2015**
(21) Application number: 13835317.2
(22) Date of filing: 04.09.2013
(51) Int. Cl.: H04W 24/10

(54) **METHOD, SYSTEM AND DEVICE FOR MEASURING NEW CARRIER**

(30) Priority: 04.09.2012 CN 201210323715
(71) Applicant: China Mobile Communications Corporation, Beijing 100032 (CN)
(72) Inventor: HU, Nan, Beijing 100032 (CN); JIANG, Xiaowei, Beijing 100032 (CN)
(74) Representative: Bongiovanni, Simone
(86) International application number: PCT/CN2013/082932
(87) International publication number: WO 2014/036942

(57) **Abstract**

The present disclosure provides a new-type carrier measurement method, a new-type carrier measurement system and new-type carrier measurement devices. When it is determined that a new-type carrier is required to be measured by a UE, an eNB will notify the UE of measurement configuration information of the new-type carrier, and transmit a dedicated measurement signal on the new-type carrier in accordance with the measurement configuration information. The measurement configuration information may include an operating frequency point of the new-type carrier, a measurement bandwidth, a measurement time and a position of the dedicated measurement signal. The UE measures the dedicated measurement signal on the new-type carrier in accordance with the received measurement configuration information, and reports a measurement result to the eNB. According to the present disclosure, it is able to reduce control overhead of the new-type carrier.

## Description

### TECHNICAL FIELD

The present disclosure relates to the field of radio technology, in particular to a new-type carrier measurement method, a new-type carrier measurement system and a new-type carrier measurement device.

### BACKGROUND

For an existing Long Term Evolution (LTE) system, carrier measurement is required to be performed at a user equipment (UE) in some cases, and a measurement result is required to be reported to an enhanced node B (eNB), so as to enable the eNB to schedule the UE in accordance with the received measurement result, for example, to control the UE to carry out cell handover.

An existing carrier measurement method mainly includes the following steps.
1) At first, the UE performs downlink synchronization, including time synchronization and frequency synchronization, on a carrier to be measured.
   a) Time synchronization: a primary synchronization signal of the carrier is detected at first, a secondary synchronization signal is then detected in accordance with a fixed relationship between the primary synchronization signal and the secondary synchronization signal in a time domain, and then the time synchronization within a certain subframe of the carrier is achieved on the basis of the detected primary synchronization signal and secondary synchronization signal.
   b) Frequency synchronization: after the completion of the time synchronization, it is required to carry out more precise frequency synchronization, so as to ensure a consistent frequency offset for signals at both a receiver and a transmitter. To be specific, frequency offset estimation and correction may be carried out through the secondary synchronization signal, a pilot sequence or a cyclic prefix (CP) signal.
2) After the completion of the downlink synchronization, the UE may acquire a carrier bandwidth and other desired system information.
3) The UE measures a common reference signal on the carrier in accordance with the acquired information and reports a measurement result to the eNB.

The above-mentioned carrier measurement method is mainly adopted for a traditional carrier. However, along with the development of the technology, a new-type carrier is proposed. The so-called new-type carrier refers to a carrier which merely takes charge of transmitting data, without carrying any control information, i.e., the above-mentioned primary synchronization signal, secondary synchronization signal, common reference signal and so forth.

If the new-type carrier is measured using the existing carrier measurement method, it is required to configure the control information, i.e., the primary synchronization signal, the secondary synchronization signal, the common reference signal and so forth, for the new-type carrier, which will result in very large control overhead for the new-type carrier. However, there is no effective solution in the prior art so as to overcome this defect.

### SUMMARY

An object of the present disclosure is to provide a new-type carrier measurement method, a new-type carrier measurement system and a new-type carrier measurement device, so as to reduce control overhead for the new-type carrier.

In one aspect, the present disclosure provides a new-type carrier measurement method, including steps of:
when it is determined that a new-type carrier is required to be measured by a UE, notifying, by an eNB, the UE of measurement configuration information of the new-type carrier, and transmitting a dedicated measurement signal on the new-type carrier in accordance with the measurement configuration information, the measurement configuration information including an operating frequency point of the new-type carrier, a measurement bandwidth, a measurement time and a position of the dedicated measurement signal; and
measuring, by the UE, the dedicated measurement signal on the new-type carrier in accordance with the measurement configuration information, and reporting a measurement result to the eNB.

In another aspect, the present disclosure provides a new-type carrier measurement system, including:
an eNB configured to, when it is determined that a new-type carrier is required to be measured by a UE, notify the UE of measurement configuration information of the new-type carrier, transmit a dedicated measurement signal on the new-type carrier in accordance with the measurement configuration information, and receive a measurement result reported by the UE, the measurement configuration information including an operating frequency point of the new-type carrier, a measurement bandwidth, a measurement time and a position of the dedicated measurement signal; and
the UE configured to measure the dedicated measurement signal on the new-type carrier in accordance with the measurement configuration information, and report the measurement result to the eNB.

In yet another aspect, the present disclosure provides an eNB, including:
a transmission module configured to, when it is determined that a new-type carrier is required to be measured by a UE, notify the UE of measurement configuration information of the new-type carrier, and transmit a dedicated measurement signal on the new-type carrier in accordance with the measurement configuration information, the measurement configuration information including an operating frequency point of the new-type carrier, a measurement bandwidth, a measurement time and a position of the dedicated measurement signal; and
a first reception module configured to receive a measurement result reported by the UE after measuring the dedicated measurement signal on the new-type carrier in accordance with the measurement configuration information.

In still yet another aspect, the present disclosures provides a UE, including:
a second reception module configured to, when it is required to measure a new-type carrier, receive measurement configuration information of the new-type carrier from an eNB, and transmit it to a report module, the measurement configuration information including an operating frequency point of the new-type carrier, a measurement bandwidth, a measurement time and a position of the dedicated measurement signal; and
the report module configured to measure the dedicated measurement signal on the new-type carrier in accordance with the measurement configuration information, and report a measurement result to the eNB.

According to the present disclosure, it is able to measure the new-type carrier by the UE, without any need to configure such control information as a primary synchronization signal, a secondary synchronization signal, a common reference signal and so forth for the new-type carrier. As a result, it is able to reduce the control overhead for the new-type carrier. In addition, it is able to implement the present disclosure in a simple and convenient manner, thereby to facilitate the application and promotion thereof.

### BRIEF DESCRIPTION OF THE DRAWINGS

Fig.1 is a flow chart of a new-type carrier measurement method according to one embodiment of the present disclosure;
Fig.2 is a schematic view showing the segmented sub-bands according to one embodiment of the present disclosure;
Fig.3 is a schematic view showing a new-type carrier measurement system according to one embodiment of the present disclosure;
Fig.4 is a schematic view showing an eNB according to one embodiment of the present disclosure; and
Fig.5 is a schematic view showing a UE according to one embodiment of the present disclosure.

### DETAILED DESCRIPTION

In order to overcome the defects in the prior art, the present disclosure provides a new-type carrier measurement solution, so as to reduce control overhead for a new-type carrier.

In order to make the objects, the technical solutions and the advantages of the present disclosure more apparent, the present disclosure will be described hereinafter in conjunction with the drawings and the embodiments.

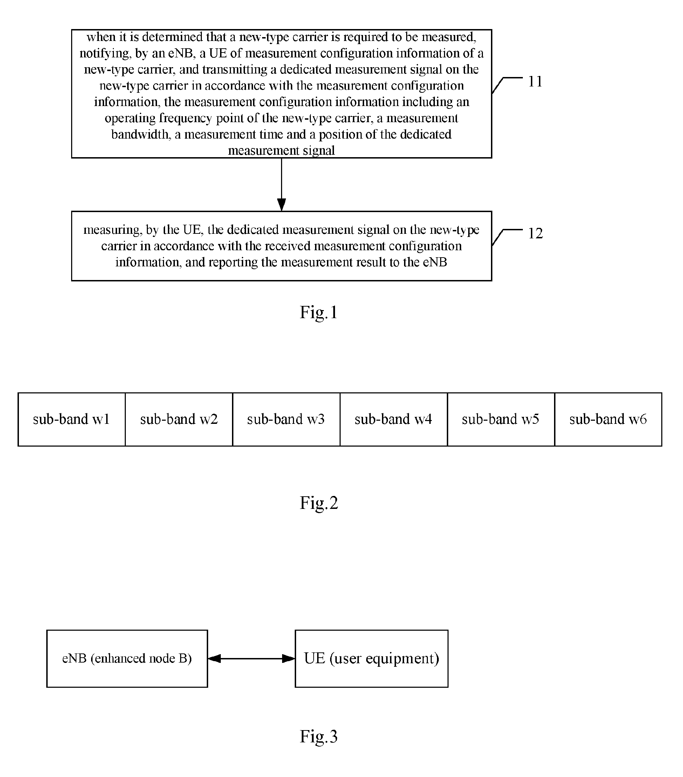

Referring to Fig.1, which is a flow chart of a new-type carrier measurement method according to one embodiment of the present disclosure, the method includes the following steps.

Step 11: when it is determined that a new-type carrier is required to be measured by a UE, notifying, by an eNB, the UE of measurement configuration information of the new-type carrier, and transmitting a dedicated measurement signal on the new-type carrier in accordance with the measurement configuration information, the measurement configuration information including an operating frequency point of the new-type carrier, a measurement bandwidth, a measurement time and a position of the dedicated measurement signal.

During the actual application, alternatively, the eNB may determine whether or not it is required to measure the new-type carrier by the UE in accordance with a predetermined decision criterion. Presumed that the new-type carrier is a carrier B, whether or not it is required to measure the carrier B by the UE may be determined in accordance with position information of the UE. The position information of the UE may be reported to the eNB by itself, or estimated by the eNB in accordance with other information reported by the UE. The way for acquiring the position information of the UE by the eNB is known in the art. If it is determined by the eNB in accordance with the position information of the UE that the UE approaches a coverage area of the carrier B, it will be determined that it is required to measure the carrier B by the UE. Alternatively, no decision criterion may be preset, and it is required, by default, to measure relevant new-type carriers by respective UEs.

Correspondingly, the eNB may notify the UE of the measurement configuration information of the carrier B. To be specific, the UE may be notified of the measurement configuration information of the carrier B by means of an old-type carrier with which the UE has established a connection. In the prior art, when a UE is turned on, it will perform such a processing as frequency sweeping, and then select a desirable carrier to reside and establish the connection therewith. Presumed that this carrier is a carrier A, the eNB may notify the UE of the measurement configuration information of the carrier B via the carrier A in a radio resource control (RRC) signaling manner. In other words, an existing RRC signaling will be extended, and the measurement configuration information of the carrier B will be carried in the extended RRC signaling and then transmitted to the UE. The ways for extending the RRC signaling will not be particularly defined herein.

In addition, the eNB may determine contents included in the measurement configuration information of the carrier B and the values for respective contents in accordance with practical needs.

Usually, the measurement configuration information of the carrier B may include the followings.

### 1) Operating frequency point of carrier B

The operating frequency point of the carrier B may refer to an actual operating frequency point f1 of the carrier B, or an operating frequency point of the carrier B taken for granted by the UE. The so-called "taken for granted by the UE" refers to the condition where the actual operating frequency point of the carrier B is f1, but the operating frequency point of the carrier B notified by the eNB to the UE is f2. In this way, it is able to ensure the eNB to schedule resources of the carrier B in a more flexible manner.

### 2) Measurement time

The measurement time just refers to measurement time-domain information, and the eNB will notify the UE of a subframe at which the carrier B may be measured.

### 3) Measurement bandwidth

The measurement bandwidth just refers to measurement frequency-domain information, and the eNB will notify the UE of a bandwidth at which the carrier B may be measured.

### 4) Position of dedicated measurement signal

The eNB will use a RE, which represents subcarriers X symbols, defined in an LTE system as granularity, i.e. it will notify the UE of the REs in which the dedicated measurement signal is included.

### 5) Contents of dedicated measurement signal

These contents are optional. If the UE can acquire the contents of the dedicated measurement signal, a more accurate measurement result will be obtained when the dedicated measurement signal is measured subsequently.

### 6) Decision threshold

The decision threshold is also optional and can be used to control the UE to report the measurement result. To be specific, the UE will report the measurement result only when the measurement result is greater than the decision threshold, and otherwise, it will not report the measurement result.

In addition, apart from notifying the UE of the measurement configuration information of the carrier B, the eNB is also required to transmit the dedicated measurement signal on the carrier B in accordance with the measurement configuration information of the carrier B, i.e., to correspondingly transmit the dedicated measurement signal on the carrier B in accordance with the measurement bandwidth, the measurement time, the position and contents of the dedicated measurement signal which have been notified to the UE.

Step 12: measuring, by the UE, the dedicated measurement signal on the new-type carrier in accordance with the received measurement configuration information, and reporting the measurement result to the eNB.

In this step, the UE may measure the dedicated measurement signal on the carrier B in accordance with the received measurement configuration information of the carrier B, i.e., find out the carrier B in accordance with its operating frequency point and measure the dedicated measurement signal on the carrier B in accordance with the designated measurement bandwidth, measurement time, and position and contents of the dedicated measurement signal, and then report the measurement result to the eNB.

If the measurement configuration information received by the UE includes the decision threshold, the UE is also required to determine whether or not the measurement result is greater than the decision threshold prior to reporting the measurement result to the eNB. If yes, the UE will report the measurement result to the eNB, and if not, it will not report the measurement result to the eNB. For the eNB, the measurement result which is less than or equal to the decision threshold is useless, and it is able to save uplink resources of the UE if it is not reported. Values of the decision threshold may be set in accordance with practical needs.

In addition, the UE may report the measurement result to the eNB either in a whole bandwidth mode or a segmented bandwidth mode, which will be described hereinafter.

### 1) Whole bandwidth mode

The whole bandwidth mode refers to a mode in which the measurement result reported by the UE represents an entire measurement result of the whole measurement bandwidth, i.e., the UE merely reports one measurement result to the eNB with respect to the whole measurement bandwidth.

To be specific, the UE may measure the respective dedicated measurement signals within the measurement bandwidth, generate one measurement result corresponding to the measurement bandwidth in accordance with the respective measurement results, and then report the measurement result corresponding to the measurement bandwidth to the eNB. The measurement result corresponding to the measurement bandwidth may be generated in accordance with the measurement results by calculating an average value of the respective measurement results within the measurement bandwidth and then using the calculated average value as the measurement result corresponding to the measurement bandwidth.

### 2) Segmented bandwidth mode

The segmented bandwidth mode refers to a mode in which the measurement bandwidth is segmented into a series of sub-bands, and the UE reports one measurement result to the eNB with respect to each sub-band, respectively.

To be specific, the UE may segment the measurement bandwidth into N sub-bands (N is a positive integer greater than 1 and its value may be set in accordance with practical needs), and then perform the following processings with respect to each sub-band: measuring the respective dedicated measurement signals within each sub-band, generating one measurement result corresponding to each sub-band in accordance with the respective measurement results, and then reporting the measurement result corresponding to each sub-band to the eNB. The measurement result corresponding to each sub-band may be generated in accordance with the measurement results by calculating an average value of the respective measurement results within each sub-band and using the calculated average value as the measurement result corresponding to each sub-band.

Referring to Fig.2, which is a schematic view showing the segmented sub-bands according to one embodiment of the present disclosure, presumed that the measurement bandwidth is W which is segmented into six sub-bands, i.e., w1, w2, w3, w4, w5 and w6, the UE will generate one measurement result corresponding each sub-band, and report it to the eNB. For the UE, it may report six measurement results corresponding to all the six sub-bands together to the eNB after obtaining these measurement results, or report the measurement result corresponding to each sub-band to the eNB immediately after obtaining the measurement result, which are not particularly defined herein.

The processing performed by the eNB in accordance with the received measurement result is not directly related to the present disclosure, and thus will not be described herein.

Referring to Fig.3, which is a schematic view showing a new-type carrier measurement system according to one embodiment of the present disclosure, the system includes:
an eNB configured to, when it is determined that a new-type carrier is required to be measured by a UE, notify the UE of measurement configuration information of the new-type carrier, transmit a dedicated measurement signal on the new-type carrier in accordance with the measurement configuration information, and receive a measurement result reported by the UE, the measurement configuration information including an operating frequency point of the new-type carrier, a measurement bandwidth, a measurement time and a position of the dedicated measurement signal; and
the UE configured to measure the dedicated measurement signal on the new-type carrier in accordance with the measurement configuration information, and report the measurement result to the eNB.

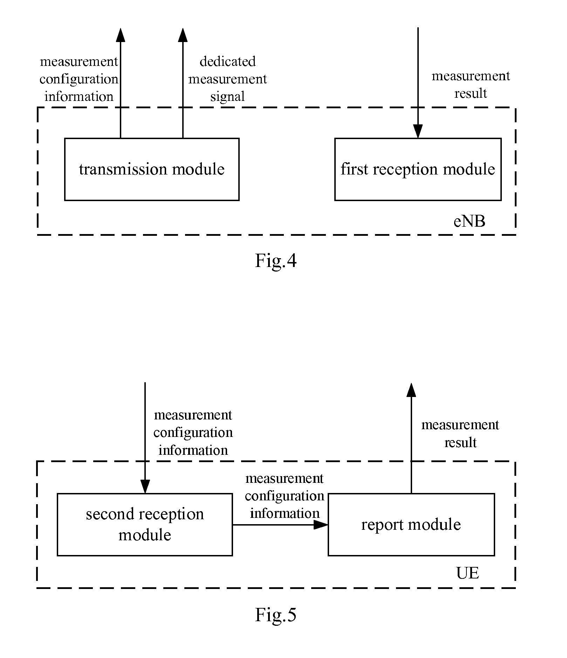

Referring to Fig.4, which is a schematic vie showing the eNB according to one embodiment of the present disclosure, the eNB includes:
a transmission module configured to, when it is determined that a new-type carrier is required to be measured by a UE, notify the UE of measurement configuration information of the new-type carrier, and transmit a dedicated measurement signal on the new-type carrier in accordance with the measurement configuration information, the measurement configuration information including an operating frequency point of the new-type carrier, a measurement bandwidth, a measurement time and a position of the dedicated measurement signal; and
a first reception module configured to receive a measurement result reported by the UE, after the dedicated measurement signal on the new-type carrier is measured by the UE in accordance with the measurement configuration information,
wherein the transmission module notifies the UE of the measurement configuration information through an old-type carrier with which the UE has established a connection.

Referring to Fig.5, which is a schematic view showing the UE according to one embodiment of the present disclosure, the UE includes:
a second reception module configured to, when it is required to measure a new-type carrier, receive measurement configuration information of the new-type carrier from an eNB, and transmit it to a report module, the measurement configuration information including an operating frequency point of the new-type carrier, a measurement bandwidth, a measurement time and a position of the dedicated measurement signal; and
the report module configured to measure the dedicated measurement signal on the new-type carrier in accordance with the measurement configuration information, and report a measurement result to the eNB,
wherein the second reception module receives the measurement configuration information from the eNB through an old-type carrier with which the UE has established a connection.

The measurement configuration information may further include contents of the dedicated measurement information, and a decision threshold. Correspondingly, the report module may be further configured to, prior to reporting the measurement result to the eNB, determine whether or not the measurement result is greater than the decision threshold, and if yes, report the measurement result to the eNB.

During actual applications, the report module may measure each dedicated measurement signal within the measurement bandwidth, generate the measurement result corresponding to the measurement bandwidth, and report the measurement result to the eNB. Alternatively, the report module may segment the measurement bandwidth into N sub-bands (N is a positive integer greater than 1), and perform the following processings with respect to each sub-band: measuring the respective dedicated measurement signals within each sub-band, generating one measurement result corresponding to each sub-band in accordance with the respective measurement results, and then reporting the measurement result corresponding to each sub-band to the eNB. The measurement result corresponding to the measurement bandwidth may be an average value of the measurement results within the measurement bandwidth, and the measurement result corresponding to each sub-band may be an average value of the respective measurement results within each sub-band.

The operating procedures of the system and device shown in Figs.3-5 may refer to the above description in the method embodiment, and they will not be repeated herein.

According to the present disclosure, it is able to measure the new-type carrier by the UE, without any need to configure such control information as a primary synchronization signal, a secondary synchronization single, a common reference signal and so forth for the new-type carrier. As a result, it is able to reduce the control overhead for the new-type carrier. In addition, it is able to implement the present disclosure in a simple and convenient manner, thereby to facilitate the application and promotion thereof.

The above are merely the preferred embodiments of the present disclosure, but shall not be used to limit the present disclosure. A person skilled in the art may make further modifications and improvements without departing from the principle and spirit of the present disclosure, and these modifications and improvements shall also fall within the scope of the present disclosure.

## Claims

1. A new-type carrier measurement method, comprising steps of:
when it is determined that a new-type carrier is required to be measured by a user equipment (UE), notifying, by an enhanced node B (eNB), the UE of measurement configuration information of the new-type carrier, and transmitting a dedicated measurement signal on the new-type carrier in accordance with the measurement configuration information, wherein the measurement configuration information includes an operating frequency point of the new-type carrier, a measurement bandwidth, a measurement time and a position of the dedicated measurement signal; and
measuring, by the UE, the dedicated measurement signal on the new-type carrier in accordance with the measurement configuration information, and reporting a measurement result to the eNB.

2. The method according to claim 1, wherein the step of notifying, by the eNB, the UE of the measurement configuration information of the new-type carrier comprises:
notifying, by the eNB, the UE of the measurement configuration information through an old-type carrier with which the UE has established a connection.

3. The method according to claim 1, wherein the measurement configuration information further comprises contents of the dedicated measurement signal.

4. The method according to claim 1 or 2 or 3, wherein he measurement configuration information further comprises a decision threshold, and
prior to reporting the measurement result to the eNB, the new-type carrier measurement method further comprises: determining, by the UE, whether or not the measurement result is greater than the decision threshold, and if yes, reporting the measurement result to the eNB.

5. The method according to claim 1, wherein the step of measuring, by the UE, the dedicated measurement signal on the new-type carrier in accordance with the measurement configuration information and reporting the measurement result to the eNB comprises:
measuring, by the UE, the respective dedicated measurement signals within the measurement bandwidth, generating one measurement result corresponding to the measurement bandwidth in accordance with respective measurement results, and reporting the measurement result corresponding to the measurement bandwidth to the eNB, or
segmenting, by the UE, the measurement bandwidth into N sub-bands, and performing the following processings with respect to each sub-band: measuring the respective dedicated measurement signals within each sub-band, generating one measurement result corresponding to each sub-band in accordance with the respective measurement results, and reporting the measurement result corresponding to each sub-band to the eNB, where N is a positive integer greater than 1.

6. The method according to claim 5, wherein the step of generating one measurement result corresponding to the measurement bandwidth in accordance with respective measurement results comprises: calculating an average value of the respective measurement results within the measurement bandwidth, and using the calculated average value as the measurement result corresponding to the measurement bandwidth, and
the step of generating one measurement result corresponding to each sub-band in accordance with the respective measurement results comprises: calculating an average value of respective measurement results within each sub-band, and using the calculated average value as the measurement result corresponding to each sub-band.

7. Anew-type carrier measurement system, comprising:
an enhanced node B (eNB) configured to, when it is determined that a new-type carrier is required to be measured by a user equipment (UE), notify the UE of measurement configuration information of the new-type carrier, transmit a dedicated measurement signal on the new-type carrier in accordance with the measurement configuration information, and receive a measurement result reported by the UE, wherein the measurement configuration information includes an operating frequency point of the new-type carrier, a measurement bandwidth, a measurement time and a position of the dedicated measurement signal; and
the UE configured to measure the dedicated measurement signal on the new-type carrier in accordance with the measurement configuration information, and report the measurement result to the eNB.

8. An enhanced node B (eNB), comprising:
a transmission module configured to, when it is determined that a new-type carrier is required to be measured by a user equipment (UE), notify the UE of measurement configuration information of the new-type carrier, and transmit a dedicated measurement signal on the new-type carrier in accordance with the measurement configuration information, wherein the measurement configuration information includes an operating frequency point of the new-type carrier, a measurement bandwidth, a measurement time and a position of the dedicated measurement signal; and
a first reception module configured to receive a measurement result reported by the UE, after the dedicated measurement signal on the new-type carrier is measured by the UE in accordance with the measurement configuration information.

9. The eNB according to claim 8, wherein the transmission module notifies the UE of the measurement configuration information through an old-type carrier with which the UE has established a connection.

10. A user equipment (UE), comprising:
a second reception module configured to, when it is required to measure a new-type carrier, receive measurement configuration information of the new-type carrier from an enhanced node B (eNB), and transmit it to a report module, wherein the measurement configuration information includes an operating frequency point of the new-type carrier, a measurement bandwidth, a measurement time and a position of the dedicated measurement signal; and
the report module configured to measure the dedicated measurement signal on the new-type carrier in accordance with the measurement configuration information, and report a measurement result to the eNB.

11. The UE according to claim 10, wherein the second reception module receives the measurement configuration information from the eNB, the measurement configuration information is transmitted by the eNB through an old-type carrier with which the UE has established a connection.

12. The UE according to claim 10, wherein the measurement configuration information further comprises contents of the dedicated measurement signal.

13. The UE according to claim 10 or 11 or 12, wherein the measurement configuration information further includes a decision threshold, and
the report module is further configured to, prior to reporting the measurement result to the eNB, determine whether or not the measurement result is greater than the decision threshold, and if yes, report the measurement result to the eNB.

14. The UE according to claim 10, wherein
the report module is configured to measure the respective dedicated measurement signals within the measurement bandwidth, generate one measurement result corresponding to the measurement bandwidth in accordance with respective measurement results, and report the measurement result corresponding to the measurement bandwidth to the eNB, or
the report module is configured to segment the measurement bandwidth into N sub-bands, and perform the following processings with respect to each sub-band: measure the respective dedicated measurement signals within each sub-band, generating one measurement result corresponding to each sub-band in accordance with the respective measurement results, and reporting the measurement result corresponding to each sub-band to the eNB, where N is a positive integer greater than 1.

15. The UE according to claim 14, wherein
the measurement result corresponding to the measurement bandwidth is an average value of the respective measurement results within the measurement bandwidth, and
the measurement result corresponding to each sub-band is an average value of the respective measurement results within each sub-band.
